# EUROPEAN PATENT APPLICATION

(11) **EP 4 851 791 A1**
(43) Date of publication of application: **09.12.2026**
(21) Application number: 24925479.8
(22) Date of filing: 03.09.2024
(51) Int. Cl.: G06F 9/4401, G06F 9/445, G06F 21/53, G06F 21/74

(54) **COMPUTER SYSTEM, APPLICATION RUNNING METHOD, AND CORRESPONDING DEVICE**

(30) Priority: 19.02.2024 CN 202410187290
(71) Applicant: HUAWEI TECHNOLOGIES CO., LTD., Shenzhen, Guangdong 518129 (CN)
(72) Inventor: ZHANG, Zhangkai, Shenzhen, Guangdong 518129 (CN); YAO, Dongdong, Shenzhen, Guangdong 518129 (CN); HAN, Peng, Shenzhen, Guangdong 518129 (CN)
(74) Representative: Huawei European IPR
(86) International application number: PCT/CN2024/116493
(87) International publication number: WO 2025/175739

(57) **Abstract**

This application provides a computer system, including a confidential computing operating system and a general-purpose operating system. The confidential computing operating system includes a sub-operating system of an independent framework or/and a sub-operating system of a collaborative framework. The sub-operating system of the independent framework is configured to independently run an application of a first type, the application of the first type is an application migrated from the general-purpose operating system, and the application of the first type is a non-CA in the general-purpose operating system. The sub-operating system of the collaborative framework is configured to run an application of a second type in collaboration with the general-purpose operating system, where a part of code of the application of the second type is run in the sub-operating system of the collaborative framework, and remaining code in code of the application of the second type other than the part of code is run in the general-purpose operating system. In this way, a sub-operating system running in the confidential computing operating system is chosen based on a type of an application, so that both usability of the confidential computing operating system and security of the confidential computing operating system can be considered.

## Description

This application claims priority to Chinese Patent Application No. 202410187290.9, filed with the China National Intellectual Property Administration on February 19, 2024 and entitled "COMPUTER SYSTEM, APPLICATION RUNNING METHOD, AND CORRESPONDING APPARATUS", which is incorporated herein by reference in its entirety.

### TECHNICAL FIELD

This application relates to the field of computer technologies, and in particular, to a computer system, an application running method, and a corresponding apparatus.

### BACKGROUND

An operating system (operating system, OS) may include a trusted operating system (Trusted OS) and a rich operating system (Rich OS). The rich operating system is also referred to as a universal operating system or a general-purpose operating system. The trusted operating system runs in a trusted execution environment (trusted execution environment, TEE), and the rich operating system runs in a rich execution environment (rich execution environment, REE). An application running in the REE may include a common application and a client application (client application, CA), and an application running in the TEE is referred to as a trusted application (trusted application, TA). All code of the common application is run in the REE. A part of code of the CA is run in the REE, the other part of code is run in the TEE, and all the code run in the REE and the TEE in a form of CA-TA.

In a cloud scenario, if the common application in the REE needs to use the TEE, migration costs are very high. If all the code of the common application is migrated to the TEE, a known or unknown vulnerability inevitably exists because the common application usually has a large quantity of lines of code, which may bring a great security risk to the trusted operating system. If only a part of the code is migrated and the common application is constructed into the form of CA-TA for running, the code needs to be split and reconstructed, resulting in poor usability.

### SUMMARY

This application provides a computer system and an application running method, to improve usability and security of migrating a common application in an REE to a TEE. This application further provides a corresponding apparatus, a computer-readable storage medium, a computer program product, and the like.

A first aspect of this application provides a computer system, including a confidential computing operating system and a general-purpose operating system. The confidential computing operating system includes a sub-operating system of an independent framework or/and a sub-operating system of a collaborative framework. The sub-operating system of the independent framework is configured to independently run an application of a first type, the application of the first type is an application migrated from the general-purpose operating system, and the application of the first type is a non-client application CA in the general-purpose operating system. The sub-operating system of the collaborative framework is configured to run an application of a second type in collaboration with the general-purpose operating system, where a part of code of the application of the second type is run in the sub-operating system of the collaborative framework, and remaining code in code of the application of the second type other than the part of code is run in the general-purpose operating system.

In this application, the general-purpose operating system is an operating system running in the REE, and the confidential computing operating system is an operating system running in the TEE.

In this application, the sub-operating system of the independent framework is an operating system that independently runs an application in the TEE, and can run a corresponding application without interacting with the general-purpose operating system in the REE. The sub-operating system of the collaborative framework is an operating system that runs in the TEE but needs to collaborate with the general-purpose operating system in the REE to process a CA-TA when running an application.

In this application, the application of the first type may be a common application (non-CA) that originally runs in the general-purpose operating system, and the application of the first type may be migrated to the sub-operating system of the independent framework for running without modifying code. In this way, code does not need to be modified, and usability of the confidential computing operating system can be improved.

In this application, the application of the second type may be a TA, or a CA-TA. In this way, the application of the second type does not need to migrate all code to the confidential computing operating system, and only needs to migrate, based on a requirement, a part of code to the sub-operating system of the collaborative framework for running. In this way, a large amount of code does not need to be introduced, and security of the confidential computing operating system can be improved.

It can be learned from the first aspect that a sub-operating system running in the confidential computing operating system is chosen based on a type of an application, so that both usability of the confidential computing operating system and security of the confidential computing operating system can be considered.

In a possible implementation, the computer system further includes a switch module. The switch module is configured to choose, based on a format of a to-be-loaded application, a sub-operating system running in the confidential computing operating system.

In this possible implementation, the switch (Switch) module may choose a sub-operating system that runs in the confidential computing operating system. The switch module may choose to run the sub-operating system of the independent framework, or may choose to run the sub-operating system of the collaborative framework, or may choose to run the sub-operating system of the independent framework and the sub-operating system of the collaborative framework together. In this way, the sub-operating system in the confidential computing operating system is chosen by using the switch module, so that flexibility of running an application in the confidential computing operating system can be improved.

In a possible implementation, when the format of the to-be-loaded application indicates that the to-be-loaded application is an application of the first type, the switch module is configured to choose to run the sub-operating system of the independent framework in the confidential computing operating system.

In this possible implementation, when the format of the to-be-loaded application indicates that the application is a common application (non-CA), the switch module may choose to run the sub-operating system of the independent framework in the confidential computing operating system. In this way, the common application can be run by using the sub-operating system of the independent framework. In this way, code does not need to be modified when the common application is run in the sub-operating system of the independent framework, so that usability of the confidential computing operating system can be improved.

In a possible implementation, when the format of the to-be-loaded application indicates that the to-be-loaded application is an application of the second type, the switch module is configured to choose to run the sub-operating system of the collaborative framework in the confidential computing operating system.

In this possible implementation, when the format of the to-be-loaded application indicates that the application is a TA application, the switch module may choose to run the sub-operating system of the collaborative framework in the confidential computing operating system. In this way, the application may be run by using the sub-operating system of the collaborative framework and the general-purpose operating system system in the REE, so that security of the confidential computing operating system is improved.

In a possible implementation, when there are a plurality of to-be-loaded applications, and formats of the plurality of to-be-loaded applications indicate that the plurality of to-be-loaded applications include an application of the first type and an application of the second type, the switch module is configured to choose to run the sub-operating system of the independent framework and the sub-operating system of the collaborative framework in the confidential computing operating system.

In this possible implementation, when the to-be-loaded application includes both the common application and the TA application, both the sub-operating system of the independent framework and the sub-operating system of the collaborative framework may be run in the confidential computing operating system. In this way, diversified application requirements can be met.

In a possible implementation, system resources used for running of the sub-operating system of the independent framework and the sub-operating system of the collaborative framework are isolated by using a first container, and the system resources include a file system, a process ID, or a network resource.

In this possible implementation, system resource isolation refers to software isolation. The first container performs software isolation on the sub-operating system of the independent framework and the sub-operating system of the collaborative framework, so that a defect and a vulnerability do not spread, and security is enhanced.

In a possible implementation, a computing resource and a storage resource may alternatively be isolated by using a second container.

A second aspect of this application provides an application running method, where the method is applied to a computer system, the computer system includes a confidential computing operating system and a general-purpose operating system, the confidential computing operating system includes a sub-operating system of an independent framework or/and a sub-operating system of a collaborative framework, and the method includes: obtaining a to-be-loaded first application; and when the first application is an application of a first type, independently running the first application by using the sub-operating system of the independent framework, where the application of the first type is an application migrated from the general-purpose operating system, and the application of the first type is a non-client application CA in the general-purpose operating system; or when the first application is an application of a second type, running the first application by using the sub-operating system of the collaborative framework in collaboration with the general-purpose operating system, where a part of code of the application of the second type is run in the sub-operating system of the collaborative framework, and remaining code in code of the application of the second type other than the part of code is run in the general-purpose operating system.

In a possible implementation, the method further includes: when the first application is the application of the first type, starting the sub-operating system of the independent framework.

In a possible implementation, the method further includes: when the first application is the application of the second type, starting the sub-operating system of the collaborative framework.

In a possible implementation, the method further includes: when there are a plurality of first applications, and the plurality of first applications include the application of the first type and the application of the second type, starting the sub-operating system of the independent framework and the sub-operating system of the collaborative framework.

In a possible implementation, system resources used for running of the sub-operating system of the independent framework and the sub-operating system of the collaborative framework are isolated by using a first container, and the system resources include a file system, a process ID, or a network resource.

A third aspect of this application provides a computer device, where the computer device includes a confidential computing operating system and a general-purpose operating system, the confidential computing operating system includes a sub-operating system of an independent framework or/and a sub-operating system of a collaborative framework, and the computer device includes:
an obtaining unit, configured to obtain a to-be-loaded first application; and
a processing unit, configured to: when the first application is an application of a first type, independently run the first application by using the sub-operating system of the independent framework, where the application of the first type is an application migrated from the general-purpose operating system, and the application of the first type is a non-client application CA in the general-purpose operating system; or when the first application is an application of a second type, run the first application by using the sub-operating system of the collaborative framework in collaboration with the general-purpose operating system, where a part of code of the application of the second type is run in the sub-operating system of the collaborative framework, and remaining code in code of the application of the second type other than the part of code is run in the general-purpose operating system.

In a possible implementation, the processing unit is further configured to: when the first application is the application of the first type, start the sub-operating system of the independent framework.

In a possible implementation, the processing unit is further configured to: when the first application is the application of the second type, start the sub-operating system of the collaborative framework.

In a possible implementation, the processing unit is further configured to: when there are a plurality of first applications, and the plurality of first applications include the application of the first type and the application of the second type, start the sub-operating system of the independent framework and the sub-operating system of the collaborative framework.

In a possible implementation, system resources used for running of the sub-operating system of the independent framework and the sub-operating system of the collaborative framework are isolated by using a first container, and the system resources include a file system, a process ID, or a network resource.

A fourth aspect of this application provides a computer device. The computer device includes a processor and a computer-readable storage medium that stores a computer program. The processor is coupled to the computer-readable storage medium. When the computer program is executed by the processor, the method according to any one of the second aspect or the possible implementations of the second aspect is implemented.

A fifth aspect of this application provides a computer-readable storage medium storing one or more computer-executable instructions. When the one or more computer-executable instructions are executed by a processor, the processor performs the method according to any one of the second aspect or the possible implementations of the second aspect.

A sixth aspect of this application provides a computer program product storing one or more computer-executable instructions. When the one or more computer-executable instructions are executed by a processor, the processor performs the method according to any one of the second aspect or the possible implementations of the second aspect.

A seventh aspect of this application provides a chip system. The chip system includes a processor, configured to support a computer device in implementing the functions in any one of the second aspect or the possible implementations of the second aspect. In a possible design, the chip system may further include a memory. The memory is used to store program instructions and data that are necessary for a training node. The chip system may include a chip, or may include a chip and another discrete component.

For technical effects brought by the second aspect or any one of the possible implementations of the second aspect to the seventh aspect, refer to technical effects brought by the first aspect or different possible implementations of the first aspect. Details are not described herein again.

### BRIEF DESCRIPTION OF DRAWINGS

FIG. 1 is a diagram of a structure of a computer system according to an embodiment of this application;
FIG. 2 is a diagram of a permission level of an operating system according to an embodiment of this application;
FIG. 3 is a diagram of another structure of a computer system according to an embodiment of this application;
FIG. 4 is a diagram of a structure of a cloud system according to an embodiment of this application;
FIG. 5 is a diagram of another structure of a computer system according to an embodiment of this application;
FIG. 6A is a diagram of a structure of a confidential computing operating system according to an embodiment of this application;
FIG. 6B is a diagram of another structure of a confidential computing operating system according to an embodiment of this application;
FIG. 6C is a diagram of another structure of a confidential computing operating system according to an embodiment of this application;
FIG. 7 is a diagram of another structure of a computer system according to an embodiment of this application;
FIG. 8 is a diagram of an embodiment of an application running method according to an embodiment of this application;
FIG. 9 is a diagram of a structure of a computer device according to an embodiment of this application;
FIG. 10 is a diagram of another structure of a computer device according to an embodiment of this application; and
FIG. 11 is a diagram of another structure of a computer device according to an embodiment of this application.

### DESCRIPTION OF EMBODIMENTS

The following describes embodiments of this application with reference to accompanying drawings. It is clear that, the described embodiments are merely some rather than all of embodiments of this application. A person of ordinary skill in the art may know that with development of technologies and emergence of new scenarios, technical solutions provided in embodiments of this application are also applicable to similar technical problems.

In the specification, claims, and the accompanying drawings of this application, the terms "first", "second", and the like are intended to distinguish similar objects but do not necessarily indicate a specific order or sequence. It should be understood that the data termed in such a way is interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a computer system and an application running method, to improve usability and security of migrating a common application in an REE to a TEE. This application further provides a corresponding apparatus, a computer-readable storage medium, a computer program product, and the like. Details are separately described in the following.

For ease of understanding, the following briefly describes terms in embodiments of this application:
1. A trust zone (TrustZone) technology divides hardware resources into two worlds: a non-secure world (non-secure world) and a secure world (secure world). The non-secure world is a rich execution environment (rich execution environment, REE) side, and the secure world is a trusted execution environment (trusted execution environment, TEE) side. An operating system (operating system, OS) closely related to a user operates in the non-secure world, and may be referred to as a rich operating system (Rich OS). As a hardware security feature, the TrustZone operates in the secure world. An operating system that operates in the secure world is referred to as a trusted operating system (Trusted OS). The non-secure world does not mean that an operating system or software running in the non-secure world is malicious, but that security of an environment in which the non-secure world is located is lower than that in which the secure world is located. When a central processing unit (central processing unit, CPU) operates in the non-secure world, access to resources (such as a register, a memory, a cache, and a peripheral) in the secure world is forbidden. Once the CPU attempts to access these resources, a system directly crashes. For example, the TrustZone may set a sensitive memory as a secure memory (secure memory) by configuring a trust zone address space controller (trustZone address space controller, TZASC) register and a trust zone memory adapter (TrustZone Memory Adapter, TZMA) register. In this case, the non-secure world cannot access the memory. When the CPU operates in the secure world, the CPU can access resources in both the secure world and the non-secure world. Because the TrustZone has higher permission than the operating system in the non-secure world, the TrustZone can be used as a root of trust to provide a higher-level security protection solution for the operating system in the non-secure world.
2. A TEE is a secure area in a processor of a computer device, and ensures that various sensitive data is stored, processed, and protected in a trusted environment. The TEE is authorized security software, and can provide a secure execution environment for a "trusted application (trusted application, TA)", and ensure end-to-end security by implementing protection, confidentiality, integrity, and data access permission.
3. An REE mainly includes a universal operating system (Rich OS) running on a general-purpose embedded processor and a client application (client application, CA) in the universal operating system.
4. A TA is a trusted application running on a TEE side.
5. A CA is a client application that can invoke a TEE service and that runs on an REE side, for example, a facial recognition CA or a fingerprint recognition CA. The CA in the REE and the TA in the TEE constitute an architecture similar to a client/server architecture, where the CA serves as a client, and the TA serves as a server. The CA end initiates an access operation, and the CA and the TA exchange data through an REE communication proxy, a message channel at a hardware layer, and a TEE communication proxy. A secure communication channel is established between the CA and the TA through the REE communication proxy, the message channel at the hardware layer, and the TEE communication proxy, so that security of data transmission is ensured to some extent. Specifically, the CA invokes a TEE client application programming interface (application programming interface, API) to communicate with a corresponding TA, and the TA invokes an internal application programming interface (internal API) of the TEE to implement a related function by using a programming resource provided by the TEE.
6. A common application (non-CA) is an application that runs on an REE side and do not need to invoke data in a TEE during running, for example, a Linux application.

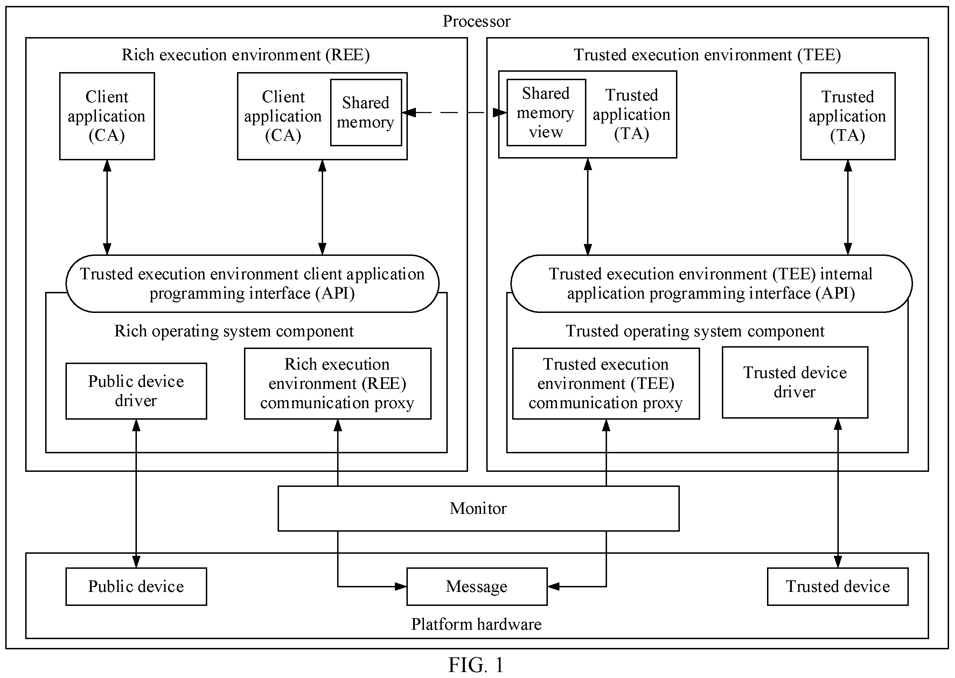

For the computer system provided in this embodiment of this application, refer to FIG. 1 for understanding. As shown in FIG. 1, the computer system includes a trusted execution environment and a rich execution environment. The trusted execution environment is specially provided for a highly security-sensitive application, and can ensure confidentiality of resources and data of the application. The rich execution environment is provided for a general-purpose operating system (also referred to as a universal operating system) and a general-purpose application. An application that interacts with the TEE on the rich execution environment side is referred to as a CA, for example, a third-party payment application such as a bank application. An application that is independently executed on the REE side may be referred to as a common application or a non-CA. An application executed on the trusted execution environment side is referred to as a TA, for example, an application that performs key services such as signature and encryption/decryption calculation.

Because the TA is run in the trusted execution environment, a deployment/upgrade operation of the TA needs to strictly comply with a security verification specification of a trusted execution environment issuer, for example, a measure such as using a digital signature, to ensure that each phase of the trusted execution environment is truly trusted. The trusted execution environment includes a trusted execution environment internal application programming interface (trusted execution environment internal application programming interface, TEE Internal API) and a trusted operating system component. Main functions of the TEE Internal API are as follows: a function of providing a trusted operating system component upward, communicating with a client application CA, implementing communication between TAs, and a function of providing functions such as secure storage, a cryptography function, and time. The trusted operating system component mainly includes a trusted device driver and a trusted execution environment TEE communication proxy. The trusted execution environment communication proxy provides a secure communication channel for the TA and the CA. For example, the trusted execution environment communication proxy transfers a message to a rich execution environment communication proxy by using platform hardware, to implement interaction between the TA and the CA. In addition, switching between the REE and the TEE is implemented by using a monitor.

The rich execution environment includes a trusted execution environment client application programming interface (trusted execution environment client application programming interface, TEE Client API) and a rich operating system. A rich operating system component mainly includes a public device driver and a rich execution environment communication proxy. The rich execution environment communication proxy is configured to communicate with the trusted execution environment, and provide a secure communication channel for the CA and the TA. The public device driver is used to drive a public device in the platform hardware. Through the TEE Client API and a TEE Functional API, the CA accesses a security service provided by the TA.

The computer system shown in FIG. 1 may also be a virtualized system. In the virtualized system, the monitor may be referred to as a hypervisor (Hypervisor, HYP), and the operating system may run on a virtual machine (virtual machine, VM) created by the hypervisor. The hypervisor has higher permission than the operating system and can be used to monitor behavior of the operating system and protect sensitive data.

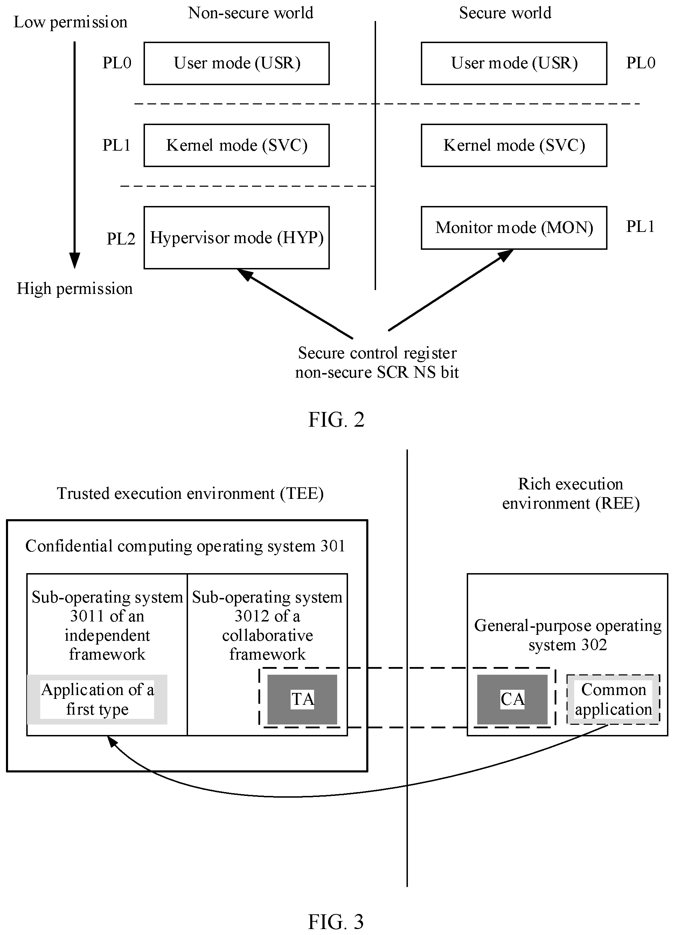

For understanding of the permission of the operating system, refer to the architecture shown in FIG. 2. As shown in FIG. 2, an ARMv7 hardware architecture is used as an example. In a non-secure world, to support CPU hardware virtualization, a hypervisor mode (Hypervisor mode, HYP) is added to an ARM in addition to two CPU modes: a user mode (user mode, USR) and a kernel mode (kernel mode, SVC). An operating system closely related to a user runs in the user mode and the kernel mode in the non-secure world, and a hypervisor runs in the newly added HYP mode.

The HYP mode is a CPU mode with highest permission in the non-secure world. When a CPU operates in this mode, the CPU can access all hardware resources in the user mode, the kernel mode, and the HYP mode. However, when the CPU runs in the other two modes, HYP-related hardware resources cannot be accessed. Therefore, the hypervisor has higher permission than the operating system.

Like the non-secure world, a secure world also includes two CPU operating modes: a user mode and a kernel mode. In ARMv7, the secure world does not support hardware virtualization. Therefore, the secure world does not include the HYP mode. However, in an ARMv8.4 architecture, the secure world supports hardware virtualization. The secure world further includes a special CPU mode with highest permission, namely, a monitor mode (Monitor mode, MON). The monitor mode is a mode with highest CPU permission. When the CPU operates in this mode, the CPU can access all hardware resources in the secure world and all hardware resources in the non-secure world.

In a TrustZone, the hypervisor can be initialized and activated by configuring a hypervisor-related control register in the monitor mode. The monitor mode is also a portal for entering the secure world from the non-secure world. In the kernel mode or the HYP mode in the non-secure world, when a secure monitor call (Secure Monitor Call, SMC) instruction is executed, the CPU can actively switch from the non-secure world to the monitor mode in the secure world. When an ERET instruction is executed in the monitor mode, the CPU determines, by checking a secure control register (Secure Control Register, SCR) non-secure (non-secure, NS) bit, to return to the non-secure world or continue to stay in the secure world. When the NS bit is set to 1, a return operation in the monitor mode is used to return to the kernel in the non-secure world and then a world switch operation is performed. When the NS bit is set to 0, a return operation in the monitor mode is used to return to the kernel of the secure world and a world switch operation is not performed.

For a structure of the computer system provided in this embodiment of this application, refer to FIG. 3 for understanding. As shown in FIG. 3, the computer system includes a confidential computing operating system 301 and a general-purpose operating system 302. The confidential computing operating system 301 includes a sub-operating system 3011 of an independent framework or/and a sub-operating system 3012 of a collaborative framework.

In this application, the general-purpose operating system 302 is an operating system running in the REE, and the confidential computing operating system 301 is an operating system running in the TEE. The confidential computing operating system 301 is a secure OS deployed in a TrustZone, can support a CA-TA application mode, and can also support running of a complete application in the TrustZone. In this way, costs of migrating a common application from the general-purpose operating system to the TEE for running can be reduced, so that usability is improved.

The confidential computing operating system may also be understood as a general-purpose OS deployed on a confidential virtual machine, for example, Linux, so that an existing application on Linux can be seamlessly migrated to the confidential virtual machine, to greatly improve usability.

In this application, the sub-operating system 3011 of the independent framework is an operating system that independently runs an application in the TEE, and can run a corresponding application without interacting with the general-purpose operating system in the REE. The sub-operating system 3012 of the collaborative framework is an operating system that runs in the TEE but needs to collaborate with the general-purpose operating system in the REE to process a CA-TA when running an application.

The sub-operating system 3011 of the independent framework is configured to independently run an application of a first type, the application of the first type is an application migrated from the general-purpose operating system, and the application of the first type is a non-client application CA in the general-purpose operating system.

The sub-operating system 3012 of the collaborative framework is configured to run an application of a second type in collaboration with the general-purpose operating system, where a part of code of the application of the second type is run in the sub-operating system of the collaborative framework, and remaining code in code of the application of the second type other than the part of code is run in the general-purpose operating system.

In this application, the application of the first type may be a common application (non-CA) that originally runs in the general-purpose operating system, and the application of the first type may be migrated to the sub-operating system of the independent framework for running without modifying code. In this way, code does not need to be modified, and usability of the confidential computing operating system can be improved.

In this application, the application of the second type may be a TA, or a CA-TA. In this way, the application of the second type does not need to migrate all code to the confidential computing operating system, and only needs to migrate, based on a requirement, a part of code to the sub-operating system of the collaborative framework for running. In this way, a large amount of code does not need to be introduced, and security of the confidential computing operating system can be improved.

It can be learned from the foregoing technical solution that a sub-operating system running in the confidential computing operating system is chosen based on a type of an application, so that both usability of the confidential computing operating system and security of the confidential computing operating system can be considered.

The computer system provided in this embodiment of this application may run on a terminal device, or may run on a cloud (cloud).

If the computer system runs on the terminal device, the terminal device may also be referred to as user equipment (user equipment, UE), a mobile station (mobile station, MS), a mobile terminal (mobile terminal, MT), or the like, and is a device including a wireless communication function (providing voice/data connectivity for a user), for example, a handheld device with a wireless connection function. Currently, some examples of the terminal device are a mobile phone (mobile phone), a tablet computer, a notebook computer, a palmtop computer, a notebook computer, a wireless router, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in vehicle to everything, a wireless terminal in remote surgery (remote medical surgery), a wireless terminal in a smart grid (smart grid), a wireless terminal in transportation safety (transportation safety), a wireless terminal in a smart city (smart city), or a wireless terminal in a smart home (smart home).

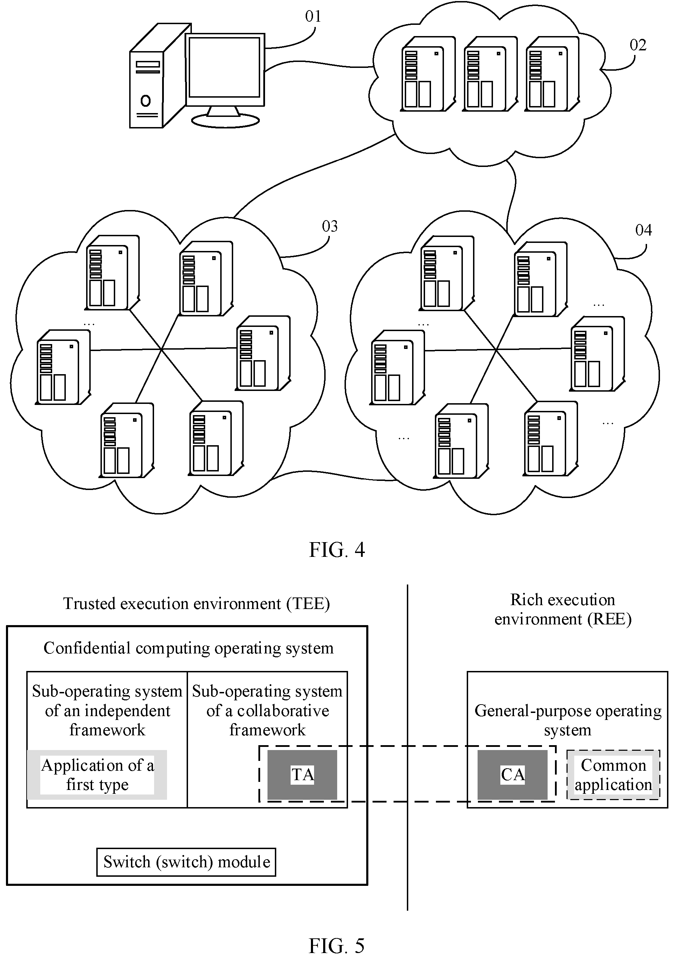

If the computer system runs on the cloud, a structure of a cloud system may be understood with reference to FIG. 4. As shown in FIG. 4, the structure of the cloud system may include a terminal device 01, a scheduling node 02, a working node cluster 03, and a working node cluster 04. Communication connections can be established between the terminal device 01 and the scheduling node 02, between the scheduling node 02 and the working node cluster 03, between the scheduling node 02 and the working node cluster 04, and between the working node cluster 03 and the working node cluster 04. For example, a communication connection may be established between the terminal device 01 and the scheduling node 02 through a network. Optionally, the network may be a local area network, the Internet, or another network. In a cloud computing scenario, the network may alternatively be a virtual private cloud (virtual private cloud, VPC). This is not limited in this embodiment of this application.

In this implementation environment, operation and maintenance personnel of the cloud system may interact with the scheduling node 02 by using the terminal device 01. For example, the operation and maintenance personnel may send a cloud system deployment instruction to the scheduling node 02 by using the terminal device 01, to instruct the scheduling node 02 to deploy the cloud system based on resources of the scheduling node 02, the working node cluster 03, and the working node cluster 04. The cloud system is configured to: manage resources of the working node cluster 03 and the working node cluster 04, and provide a cloud service for a tenant based on the resources of the working node cluster 03 and the working node cluster 04.

The scheduling node 02 may be a cloud server or a cloud physical machine, or a cloud server cluster or a physical machine cluster including a plurality of cloud servers, or a cloud computing service center. A function of the scheduling node may be implemented by using software or hardware.

The scheduling node is used as an example of a software functional unit, and the scheduling node may include code run on a computing instance. The computing instance may include at least one of a physical host (a computer device), a virtual machine, and a container. Further, there may be one or more computing instances. For example, the scheduling node may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The scheduling node is used as an example of a hardware functional unit, and the scheduling node may include at least one computer device such as a server. Alternatively, the scheduling node may be a device implemented by using an application-specific integrated circuit (application-specific integrated circuit, ASIC) or a programmable logic device (programmable logic device, PLD) or the like. The PLD may be implemented by using a complex programmable logic device (complex programmable logical device, CPLD), a field-programmable gate array (field-programmable gate array, FPGA), generic array logic (generic array logic, GAL), or any combination thereof.

The plurality of computer devices included in the scheduling node may be distributed in a same region, or may be distributed in different regions. The plurality of computer devices included in the scheduling node may be distributed in a same AZ, or may be distributed in different AZs. Similarly, the plurality of computer devices included in the scheduling node may be distributed in a same VPC, or may be distributed in a plurality of VPCs. The plurality of computer devices may be any combination of computer devices such as a server, an ASIC, a PLD, a CPLD, an FPGA, and GAL.

The working node cluster 03 and the working node cluster 04 may be a server cluster including several servers, or a cloud computing service center. A large quantity of basic resources of a cloud service provider are deployed in the cloud computing service center. For example, computing resources, storage resources, and network resources are deployed in the cloud computing service center.

It should be noted that the scheduling node 02, the working node cluster 03, and the working node cluster 04 in the implementation environment may alternatively be implemented by using another resource platform other than the cloud computing service center. This is not specifically limited in this embodiment of this application.

It should be understood that the foregoing content is an example description of the cloud system provided in this embodiment of this application, and does not constitute a limitation on an application scenario of the method for deploying the resource management system on the cloud. A person of ordinary skill in the art may know that, as a service requirement changes, the application scenario may be adjusted based on an application requirement.

The cloud system shown in FIG. 4 may be a public cloud, a private cloud, or a hybrid cloud. In the cloud system, various entity resources of a host, such as a computing resource, a network resource, and a storage resource, may be abstracted and converted by using a virtualization (virtualization) technology, and then presented, breaks the obstacles between the entity structures of the host, so that users can use these resources in a better way than the original configuration. Resources used through virtualization are referred to as virtual resources. The virtual resources are not limited by a deployment mode, a setting location, or a physical configuration of an existing physical resource.

A host (physical machine, PM) is a physical resource used to carry a virtualization technology. The host is also referred to as a physical machine. Generally, a host configured to deploy a virtual instance is a physical server. The physical machine has a plurality of physical devices. For example, the physical server has physical devices such as a processor and a memory. A plurality of virtual instances may be deployed on one host, and the plurality of virtual instances deployed on the same host share physical resources of the host. Based on different usage statuses, a virtual instance that belongs to only one user may be deployed on one host, or virtual instances that belong to a plurality of users may be deployed on one host.

The virtual instance runs on an operating system of the host, an operating system is disposed on the virtual instance, an application is run on the operating system of the virtual instance, and the application is used to implement a service of the user. The virtual instance may use a hardware resource of the host, and different virtual instances are isolated from each other. Generally, the virtual instance may be a virtual machine or a container.

A VM is a complete computer system that is obtained through simulation by using a virtualization technology, has complete hardware system functions, and runs in a completely isolated environment. Some instruction subsets of the virtual machine may be processed in a host (host), and other instructions may be executed in an emulation manner. The virtual machine is also referred to as a virtual server.

The virtual machine may be considered as a set of several virtual devices, and the set of several devices is a complete computer system that has complete hardware system functions and that runs in a completely isolated environment. A virtual device is obtained through virtualization by using the virtualization technology and based on a physical device that can share resources. For example, based on the virtualization technology, a virtual processor obtained through virtualization based on a processor is a virtual device. For another example, based on the virtualization technology, a training card obtained through virtualization based on a field programmable gate array (field programmable gate array, FPGA) is also a virtual device.

The container provides a lightweight virtual running environment. A container may be obtained by packaging all code, libraries, dependencies, and the like of a user application into an image. When being executed, the image runs in the virtual running environment. In this case, the container is a runtime instance of the image, and is similar to a lightweight sandbox and can be enabled, started, stopped, and deleted. The image does not share resources such as a memory, a processor (for example, a central processing unit (central processing unit, CPU)), and a disk of the host machine with another image. This implements container isolation between the image and the host and between the image and another image, and ensures that a process in the container cannot monitor any process or resource outside the container. Container technologies include docker, kubernetes, coreos, and other container technologies. The container may implement isolation of a software resource and/or a hardware resource.

The computer system provided in this embodiment of this application may run on the terminal device or the cloud described above. Regardless of whether the computer system runs on the terminal device or runs on the cloud, different types of applications may be run by using the sub-operating system of the independent framework or/and the sub-operating system of the collaborative framework.

There may be three cases for a sub-operating system running in the confidential operating system: 1. A sub-operating system of an independent framework running in the confidential computing operating system; 2. A sub-operating system of a collaborative framework running in the confidential computing operating system; and 3. A sub-operating system of an independent framework and a sub-operating system of a collaborative framework running in the confidential computing operating system.

The three cases may be implemented by configuring a switch module in the confidential computing operating system. The switch module may choose, based on a format of the to-be-loaded application, a sub-operating system running in the confidential computing operating system.

As shown in FIG. 5, another structure of the computer system includes a confidential computing operating system and a general-purpose operating system. The confidential computing operating system includes a sub-operating system of an independent framework or/and a sub-operating system of a collaborative framework, and a switch (switch) module.

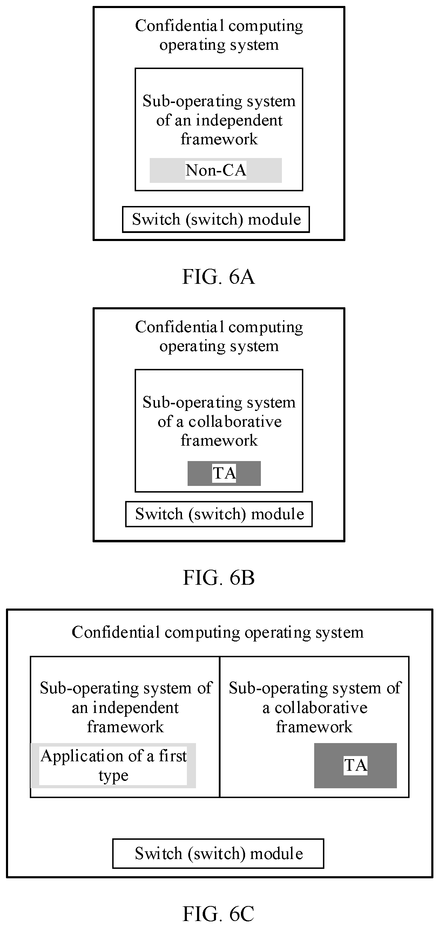

When the format of the to-be-loaded application indicates that the to-be-loaded application is an application of a first type, the switch module is configured to choose to run the sub-operating system of the independent framework in the confidential computing operating system. In other words, in the foregoing case 1, a structure of the confidential computing operating system in this case may be understood with reference to FIG. 6A.

As shown in FIG. 6A, when the format of the to-be-loaded application indicates that the application is a common application (non-CA), the switch module may choose to run the sub-operating system of the independent framework in the confidential computing operating system. In this way, the common application can be run by using the sub-operating system of the independent framework. In this way, code does not need to be modified when the common application is run in the sub-operating system of the independent framework, so that usability of the confidential computing operating system can be improved.

When the format of the to-be-loaded application indicates that the to-be-loaded application is an application of a second type, the switch module is configured to choose to run the sub-operating system of the collaborative framework in the confidential computing operating system. In other words, in the foregoing case 2, a structure of the confidential computing operating system in this case may be understood with reference to FIG. 6B.

As shown in FIG. 6B, when the format of the to-be-loaded application indicates that the application is a TA application, the switch module may choose to run the sub-operating system of the collaborative framework in the confidential computing operating system. In this way, the application may be run by using the sub-operating system of the collaborative framework and the general-purpose operating system system in the REE, so that security of the confidential computing operating system is improved.

When there are a plurality of to-be-loaded applications, and formats of the plurality of to-be-loaded applications indicate that the plurality of to-be-loaded applications include an application of the first type and an application of the second type, the switch module is configured to choose to run the sub-operating system of the independent framework and the sub-operating system of the collaborative framework in the confidential computing operating system. In other words, in the foregoing case 3, a structure of the confidential computing operating system in this case may be understood with reference to FIG. 6C.

As shown in FIG. 6C, when the to-be-loaded application includes both the common application and the TA application, both the sub-operating system of the independent framework and the sub-operating system of the collaborative framework may be run in the confidential computing operating system. In this way, diversified application requirements can be met.

It can be learned from the foregoing description that the switch module may choose a sub-operating system that runs in the confidential computing operating system. The switch module may choose to run the sub-operating system of the independent framework, or may choose to run the sub-operating system of the collaborative framework, or may choose to run the sub-operating system of the independent framework and the sub-operating system of the collaborative framework together. In this way, the sub-operating system in the confidential computing operating system is chosen by using the switch module, so that flexibility of running an application in the confidential computing operating system can be improved.

In addition, the independent-collaborative dual-framework confidential computing OS supports application splitting and/or a complete application. In this way, the confidential computing OS can meet requirements in different periods. The sub-OS of the independent framework has an attribute of a general-purpose OS, and can meet a usability requirement for a complete application. The sub-OS of the collaborative framework can also improve security. In addition, when there are a plurality of requirements, two subsystems of the independent framework and the collaborative framework may be used simultaneously, to be compatible with an existing service, so that both usability and security can be met. In this way, more flexible choices are provided for the user.

In addition, the computer system provided in this embodiment of this application may further use a container to isolate a software resource and/or a hardware resource. System resources used for running of the sub-operating system of the independent framework and the sub-operating system of the collaborative framework may be isolated by using a first container, and the system resources include a file system, a process ID, or a network resource. A computing resource and a storage resource may alternatively be isolated by using a second container.

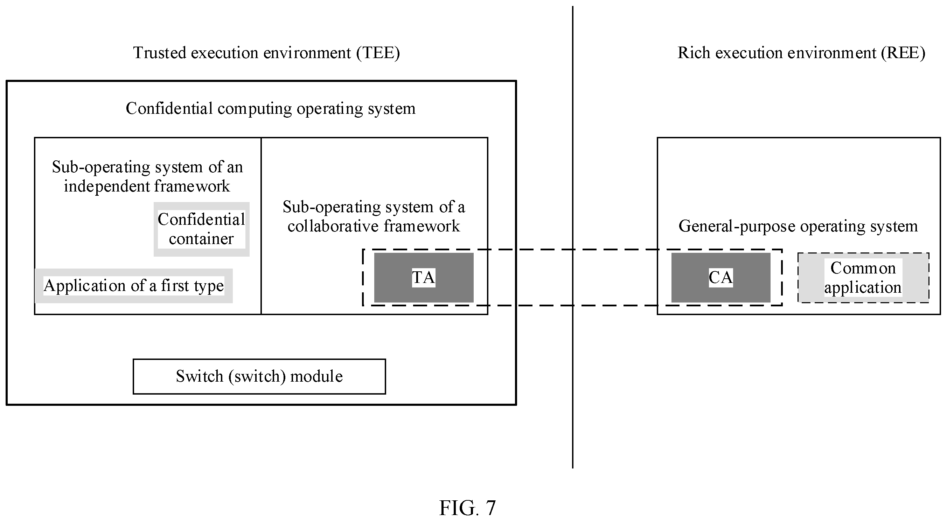

The first container and the second container may be confidential containers. The first container may be a namespace, and the second container may be a cgroup. When a confidential container is included, a structure of the computer system may be understood with reference to FIG. 7. As shown in FIG. 7, the sub-operating system of the independent framework further includes the confidential container, and the confidential container may be the first container and/or the second container.

In this embodiment of this application, the first container performs software isolation on the sub-operating system of the independent framework and the sub-operating system of the collaborative framework, so that a defect and a vulnerability do not spread, and security is enhanced.

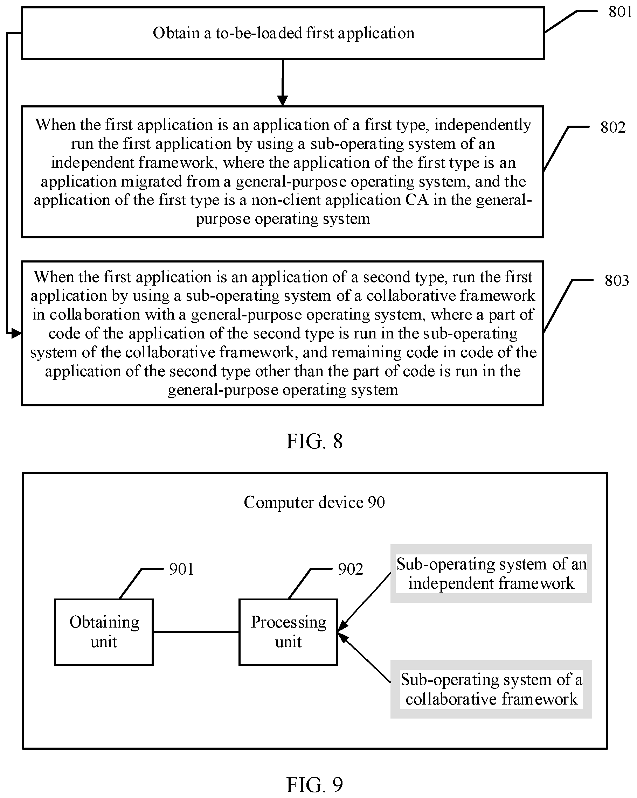

The foregoing describes the computer system. Based on the foregoing computer system, as shown in FIG. 8, an embodiment of this application provides an application running method. The method includes the following steps.

801: Obtain a to-be-loaded first application.

802: When the first application is an application of a first type, independently run the first application by using a sub-operating system of an independent framework, where the application of the first type is an application migrated from a general-purpose operating system, and the application of the first type is a non-client application CA in the general-purpose operating system.

803: When the first application is an application of a second type, run the first application by using a sub-operating system of a collaborative framework in collaboration with a general-purpose operating system, where a part of code of the application of the second type is run in the sub-operating system of the collaborative framework, and remaining code in code of the application of the second type other than the part of code is run in the general-purpose operating system.

According to the application running method provided in this embodiment of this application, a sub-operating system running in a confidential computing operating system is chosen based on a type of an application, so that both usability of the confidential computing operating system and security of the confidential computing operating system can be considered.

Optionally, the method further includes: when the first application is the application of the first type, starting the sub-operating system of the independent framework.

Optionally, the method further includes: when the first application is the application of the second type, starting the sub-operating system of the collaborative framework.

Optionally, the method further includes: when there are a plurality of first applications, and the plurality of first applications include the application of the first type and the application of the second type, starting the sub-operating system of the independent framework and the sub-operating system of the collaborative framework.

As shown in FIG. 9, an embodiment of this application provides a computer device 90, where the computer device includes a confidential computing operating system and a general-purpose operating system, the confidential computing operating system includes a sub-operating system of an independent framework or/and a sub-operating system of a collaborative framework, and the computer device 90 includes:
an obtaining unit 901, configured to obtain a to-be-loaded first application; and
a processing unit 902, configured to: when the first application is an application of a first type, independently run the first application by using the sub-operating system of the independent framework, where the application of the first type is an application migrated from the general-purpose operating system, and the application of the first type is a non-client application CA in the general-purpose operating system; or when the first application is an application of a second type, run the first application by using the sub-operating system of the collaborative framework in collaboration with the general-purpose operating system, where a part of code of the application of the second type is run in the sub-operating system of the collaborative framework, and remaining code in code of the application of the second type other than the part of code is run in the general-purpose operating system.

Optionally, the processing unit 902 is further configured to: when the first application is the application of the first type, start the sub-operating system of the independent framework.

Optionally, the processing unit 902 is further configured to: when the first application is the application of the second type, start the sub-operating system of the collaborative framework.

Optionally, the processing unit 902 the processing unit is further configured to: when there are a plurality of first applications, and the plurality of first applications include the application of the first type and the application of the second type, start the sub-operating system of the independent framework and the sub-operating system of the collaborative framework.

Optionally, system resources used for running of the sub-operating system of the independent framework and the sub-operating system of the collaborative framework may be isolated by using a first container, and the system resources include a file system, a process ID, or a network resource.

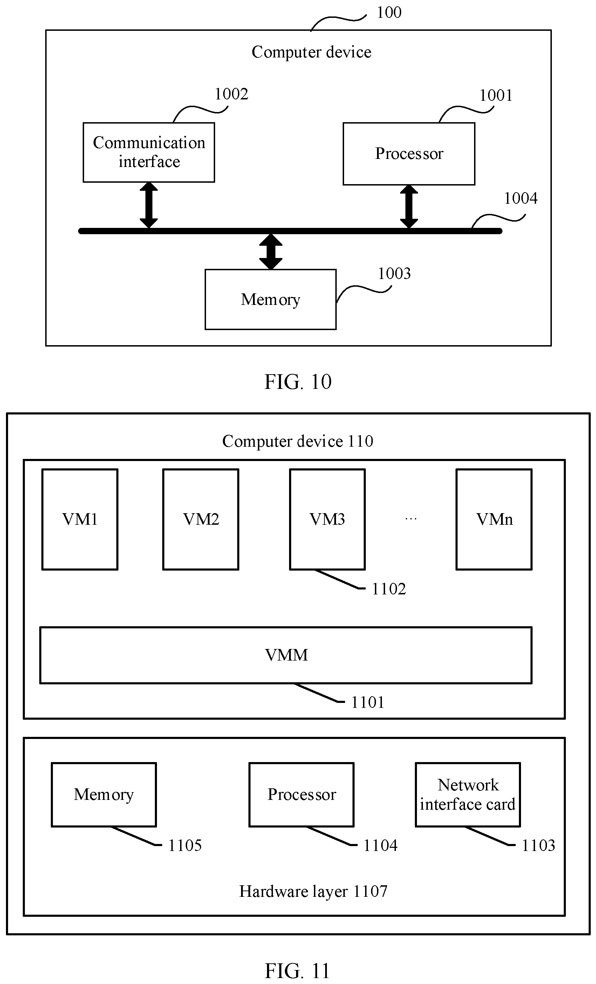

FIG. 10 is a diagram of a possible logical structure of a computer device 100 in the foregoing embodiments according to an embodiment of this application. The computer device 100 includes a confidential computing operating system and a general-purpose operating system, where the confidential computing operating system includes a sub-operating system of an independent framework or/and a sub-operating system of a collaborative framework. The computer device 100 includes a processor 1001, a communication interface 1002, a memory 1003, and a bus 1004. The processor 1001, the communication interface 1002, and the memory 1003 are connected to each other through the bus 1004. In this embodiment of this application, the processor 1001 is configured to control and manage an action of the computer device 100. For example, the processor 1001 is configured to perform steps 801 to 803 in FIG. 8 and/or another process of the technology described in this specification. The communication interface 1002 is configured to support the computer device 100 in performing communication. The memory 1003 is configured to store program code and data of the computer device 100.

The processor 1001 may be a central processing unit, a general-purpose processor, a digital signal processor, an application-specific integrated circuit, a field programmable gate array or another programmable logical device, a transistor logical device, a hardware component, or any combination thereof. The processor 1001 may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 1004 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

With reference to FIG. 11, an embodiment of this application further provides a computer device 110, including a hardware layer 1107, a virtual machine monitor (VMM) 1101 running on the hardware layer 1107, and a plurality of virtual machines 1102.

Specifically, the virtual machine 1102 is a virtual computer simulated on a common hardware resource by using virtual machine software. An operating system and an application may be installed on the virtual machine, and the virtual machine may further access a network resource. For an application running on the virtual machine, the virtual machine works like a real computer.

The hardware layer 1107 is a hardware platform running in a virtual environment, and may be obtained by abstracting hardware resources of one or more physical machines. The hardware layer may include a plurality of types of hardware, for example, include a processor 1104 (for example, a CPU) and a memory 1105, and may further include a network interface card 1103 (for example, an RDMA network interface card), a high-speed/low-speed input/output (Input/Output, I/O) device, and another device with a specific processing function.

The virtual machine 1102 runs an executable program based on the VMM and the hardware resource provided by the hardware layer 1107, to implement the steps in the foregoing method embodiments. For brevity, details are not described herein again.

Further, the computer device 110 may further include a host (Host). The host is used as a management layer and is configured to manage and allocate a hardware resource, present a virtual hardware platform for a virtual machine, and implement scheduling and isolation of the virtual machine. The host may be a virtual machine monitor (VMM) or a combination of a VMM and one privileged virtual machine. The virtual hardware platform provides various hardware resources for the virtual machines running on the virtual hardware platform. For example, the virtual hardware platform provides a virtual processor (for example, a VCPU), a virtual memory, a virtual disk, a virtual network adapter, or the like. The virtual disk may correspond to a file or a logical block device of the host. The virtual machine runs on the virtual hardware platform that is prepared by the host for the virtual machine, and one or more virtual machines run on the host. The VCPU of the virtual machine 1102 executes an executable program stored in a virtual memory corresponding to the VCPU, to implement or execute the method steps described in the foregoing method embodiments of this application.

This application further provides a chip system. The chip system includes a processor, configured to support the foregoing computer device in implementing functions related to the computer device, for example, receiving or processing data in the foregoing method embodiments. In a possible design, the chip system further includes a memory. The memory is configured to store program instructions and data that are necessary for the computer device. The chip system may include a chip, or may include a chip and another discrete component.

Another embodiment of this application further provides a computer-readable storage medium. The computer-readable storage medium stores computer-executable instructions. When at least one processor of a device executes the computer-executable instructions, the device performs the method described in the embodiment in FIG. 8.

Another embodiment of this application further provides a computer program product. The computer program product includes computer-executable instructions, and the computer-executable instructions are stored in a computer-readable storage medium. At least one processor of a device can read the computer-executable instructions from the computer-readable storage medium, and the at least one processor executes the computer-executable instructions, so that the device performs the method described in the embodiment in FIG. 8.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in embodiments of this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer readable storage medium. Based on such an understanding, the technical solutions in embodiments of this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A computer system, comprising: a confidential computing operating system and a general-purpose operating system, wherein the confidential computing operating system comprises a sub-operating system of an independent framework or/and a sub-operating system of a collaborative framework, wherein
the sub-operating system of the independent framework is configured to independently run an application of a first type, the application of the first type is an application migrated from the general-purpose operating system, and the application of the first type is a non-client application CA in the general-purpose operating system; and
the sub-operating system of the collaborative framework is configured to run an application of a second type in collaboration with the general-purpose operating system, wherein a part of code of the application of the second type is run in the sub-operating system of the collaborative framework, and remaining code in code of the application of the second type other than the part of code is run in the general-purpose operating system.

2. The computer system according to claim 1, wherein the computer system further comprises a switch module, wherein
the switch module is configured to choose, based on a format of a to-be-loaded application, a sub-operating system running in the confidential computing operating system.

3. The computer system according to claim 2, wherein when the format of the to-be-loaded application indicates that the to-be-loaded application is an application of the first type, the switch module is configured to choose to run the sub-operating system of the independent framework in the confidential computing operating system.

4. The computer system according to claim 2, wherein when the format of the to-be-loaded application indicates that the to-be-loaded application is an application of the second type, the switch module is configured to choose to run the sub-operating system of the collaborative framework in the confidential computing operating system.

5. The computer system of claim 2, wherein when there are a plurality of to-be-loaded applications, and formats of the plurality of to-be-loaded applications indicate that the plurality of to-be-loaded applications comprise an application of the first type and an application of the second type, the switch module is configured to choose to run the sub-operating system of the independent framework and the sub-operating system of the collaborative framework in the confidential computing operating system.

6. The computer system according to any one of claims 1 to 5, wherein system resources used for running of the sub-operating system of the independent framework and the sub-operating system of the collaborative framework are isolated by using a first container, and the system resources comprise a file system, a process ID, or a network resource.

7. An application running method, wherein the method is applied to a computer system, the computer system comprises a confidential computing operating system and a general-purpose operating system, the confidential computing operating system comprises a sub-operating system of an independent framework or/and a sub-operating system of a collaborative framework, and the method comprises:
obtaining a to-be-loaded first application; and
when the first application is an application of a first type, independently running the first application by using the sub-operating system of the independent framework, wherein the application of the first type is an application migrated from the general-purpose operating system, and the application of the first type is a non-client application CA in the general-purpose operating system; or
when the first application is an application of a second type, running the first application by using the sub-operating system of the collaborative framework in collaboration with the general-purpose operating system, wherein a part of code of the application of the second type is run in the sub-operating system of the collaborative framework, and remaining code in code of the application of the second type other than the part of code is run in the general-purpose operating system.

8. The method according to claim 7, wherein the method further comprises:
when the first application is the application of the first type, starting the sub-operating system of the independent framework.

9. The method according to claim 7, wherein the method further comprises:
when the first application is the application of the second type, starting the sub-operating system of the collaborative framework.

10. The method according to claim 7, wherein the method further comprises:
when there are a plurality of first applications, and the plurality of first applications comprise the application of the first type and the application of the second type, starting the sub-operating system of the independent framework and the sub-operating system of the collaborative framework.

11. The method according to any one of claims 7 to 10, wherein system resources used for running of the sub-operating system of the independent framework and the sub-operating system of the collaborative framework are isolated by using a first container, and the system resources comprise a file system, a process ID, or a network resource.

12. A computer device, comprising: a confidential computing operating system and a general-purpose operating system, wherein the confidential computing operating system comprises a sub-operating system of an independent framework or/and a sub-operating system of a collaborative framework, and the computer device comprises:
an obtaining unit, configured to obtain a to-be-loaded first application; and
a processing unit, configured to: when the first application is an application of a first type, independently run the first application by using the sub-operating system of the independent framework, wherein the application of the first type is an application migrated from the general-purpose operating system, and the application of the first type is a non-client application CA in the general-purpose operating system; or when the first application is an application of a second type, run the first application by using the sub-operating system of the collaborative framework in collaboration with the general-purpose operating system, wherein a part of code of the application of the second type is run in the sub-operating system of the collaborative framework, and remaining code in code of the application of the second type other than the part of code is run in the general-purpose operating system.

13. A computer device, comprising a processor and a computer-readable storage medium storing a computer program, wherein
the processor is coupled to the computer-readable storage medium, and when the computer program is executed by the processor, the method according to any one of claims 7 to 11 is implemented.

14. A computer-readable storage medium, wherein the computer-readable storage medium stores a computer program, and when the computer program is executed by a processor, the method according to any one of claims 7 to 11 is implemented.

15. A computer program product, wherein the computer program product comprises computer program code, and when the computer program code is run on a computer device, the computer device is enabled to perform the method according to any one of claims 7 to 11.

16. A chip system, comprising a processor, wherein the processor is invoked to perform the method according to any one of claims 7 to 11.
